# EUROPÄISCHE PATENTANMELDUNG

(11) **EP 3 712 731 A1**
(43) Veröffentlichungstag der Anmeldung: **23.09.2020**
(21) Anmeldenummer: 19163789.1
(22) Anmeldetag: 19.03.2019
(51) Int. Cl.: G05B 19/418

(54) **TRANSFORMATIONSBAUSTEIN FÜR LEITSYSTEM**

(71) Anmelder: Siemens Aktiengesellschaft, 80333 München (DE)
(72) Erfinder: Lutz, Benjamin, 76327 Pfinztal (DE)

(57) **Zusammenfassung**

Vorgeschlagen wird ein Operator Station Server (2) eines Leitsystems (1) einer technischen Anlage, insbesondere Fertigungs- oder Prozessanlage, der mit einem Operator Station Client (3) verbunden ist und einen computerimplementierten Transformationsbaustein (9) aufweist, welcher computerimplementierte Transformationsbaustein (9) dazu ausgebildet und vorgesehen ist,
Daten von einem technischen Objekt (7a, 7b) der technischen Anlage zu empfangen, wobei die Daten einen dem Leitsystem (1) unbekannten Datenstrukturtyp aufweisen,
und die Daten unter Einbezug von in einer Datenbank des Leitsystems hinterlegten Referenzdatenstrukturtypen derart anzupassen, dass der Datenstrukturtyp der Daten dem Leitsystem (1) bekannt ist,
wobei der Operator Station Server (2) dazu ausgebildet und vorgesehen ist, die angepassten Daten an den Operator Station Client (3) zur grafischen Darbietung an einen Operator zu übertragen,
und welcher computerimplementierte Transformationsbaustein (9) dazu ausgebildet und vorgesehen ist,
Daten von einem Operator Station Client (3) zu empfangen, wobei die Daten einen Datenstrukturtyp aufweisen, der einem technischen Objekt (7a, 7b) der technischen Anlage unbekannt ist,
und die Daten unter Einbezug von in einer Datenbank des Leitsystems (1) hinterlegten Referenzdatenstrukturtypen derart anzupassen, dass der Datenstrukturtyp der Daten dem technischen Objekt (7a, 7b) bekannt ist,
wobei der Operator Station Server (2) dazu ausgebildet und vorgesehen ist, die angepassten Daten an das technische Objekt (7a, 7b) zu übertragen.

## Beschreibung

Die Erfindung betrifft einen Operator Station Server eines Leitsystems einer technischen Anlage mit den Merkmalen des Anspruchs 1. Außerdem betrifft die Erfindung einen Operator Station Server eines Leitsystems einer technischen Anlage mit den Merkmalen des Anspruchs 2. Außerdem betrifft die Erfindung einen Operator Station Server eines Leitsystems einer technischen Anlage mit den Merkmalen des Anspruchs 3. Zudem betrifft die Erfindung ein Verfahren gemäß Anspruch 4. Zudem betrifft die Erfindung ein Verfahren gemäß Anspruch 5. Zudem betrifft die Erfindung ein Verfahren gemäß Anspruch 6. Außerdem betrifft die Erfindung ein Leitsystem für eine technische Anlage gemäß Anspruch 7 und ein Leitsystem für eine technische Anlage gemäß Anspruch 8.

Verfahrenstechnische Anlagen werden in der Regel von Prozessleitsystemen / Automatisierungsgeräten verschiedener Hersteller automatisiert und sind je nach Umfang auch entsprechend räumlich (Fernwirken durch RTUs - Remote Terminal Units) verteilt. Um im Gesamtkontext einer Prozessanlage eine übergreifende Prozessleitung, d.h. Orchestrierung, realisieren zu können, müssen heutige Prozessleitsysteme auch in der Lage sein, unterschiedliche Fremdsysteme, Package Units, modulare Anlagen, usw. integrieren zu können. Dies stellt eine Kernanforderung an Prozessleitsysteme im Kontext von Industrie 4.0 dar.

Durch die Modularisierung werden Anlagenteile entsprechend zusammengefasst, um das Kommunikationsaufkommen weitestgehend auf möglichst kompakte Schnittstellen begrenzen zu können. Um Fremdsysteme integrieren bzw. anbinden zu können, müssen deren Kommunikationsprotokolle zum Austausch von Prozessdaten entsprechend unterstützt werden (z.B. mittels des Protokolls UPC UA).

Ein wesentliches Ziel bei der Integration von Fremdsystemen in ein Prozessleitsystem ist neben einem effizienten Engineering eine einheitliche Visualisierung für die Bedienung und Beobachtung, obgleich sich die gesamte Anlage aus unterschiedlichen modularen Anlagenteilen (verschiedene Hersteller, unterschiedliche Automatisierungssysteme, usw.) zusammensetzt.

Die Heterogenität der Prozessautomatisierung soll dem Operator dabei möglichst verborgen bleiben, so dass diese nicht zu Lasten der Prozessführung oder der Sicherheit der Anlage fällt. Z.B. die Bedienung und Beobachtung von Ventilen über Faceplates soll für Operatoren einheitlich aussehen und funktionieren, unabhängig davon über welche Automatisierung das Ventil angesteuert wird.

Der Erfindung liegt die Aufgabe zugrunde, eine Vorrichtung zum Bedienen und Beobachten einer technischen Anlage anzugeben, die eine einheitliche Darbietung sich voneinander unterscheidender Teile der technischen Anlage unabhängig von einem Hersteller des jeweiligen Teils ermöglicht.

Diese Aufgabe wird gelöst durch einen Operator Station Server eines Leitsystems einer technischen Anlage, insbesondere Fertigungs- oder Prozessanlage, mit den Merkmalen des Anspruchs 1. Außerdem wird die Aufgabe gelöst durch einen Operator Station Server eines Leitsystems einer technischen Anlage, insbesondere Fertigungs- oder Prozessanlage, mit den Merkmalen des Anspruchs 2. Außerdem wird die Aufgabe gelöst durch einen Operator Station Server eines Leitsystems einer technischen Anlage, insbesondere Fertigungs- oder Prozessanlage, mit den Merkmalen des Anspruchs 3. Zudem wird die Aufgabe gelöst durch ein Verfahren gemäß Anspruch 4. Zudem wird die Aufgabe gelöst durch ein Verfahren gemäß Anspruch 5. Zudem wird die Aufgabe gelöst durch ein Verfahren gemäß Anspruch 6. Außerdem wird die Aufgabe gelöst durch ein Leitsystem für eine technische Anlage, insbesondere eine Fertigungs- oder Prozessanlage, gemäß Anspruch 7. Zudem wird die Aufgabe gelöst durch ein Leitsystem für eine technische Anlage, insbesondere eine Fertigungs- oder Prozessanlage, gemäß Anspruch 8. Vorteilhafte Weiterbildungen ergeben sich aus den abhängigen Ansprüchen.

Ein erfindungsgemäßer Operator Station Server eines Leitsystems einer technischen Anlage, insbesondere Fertigungs- oder Prozessanlage, ist mit einem Operator Station Client verbunden ist und weist einen computerimplementierten Transformationsbaustein auf. Der computerimplementierte Transformationsbaustein ist dazu ausgebildet und vorgesehen,
Daten von einem technischen Objekt der technischen Anlage zu empfangen, wobei die Daten einen dem Leitsystem unbekannten Datenstrukturtyp aufweisen,
und die Daten unter Einbezug von in einer Datenbank des Leitsystems hinterlegten Referenzdatenstrukturtypen derart anzupassen, dass der Datenstrukturtyp der Daten dem Leitsystem bekannt ist,
wobei der Operator Station Server dazu ausgebildet und vorgesehen ist, die angepassten Daten an den Operator Station Client zur grafischen Darbietung an einen Operator zu übertragen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Bei einem technischen Objekt kann es sich um einzelne Sensoren oder Aktoren der technischen Anlage handeln. Ein technisches Objekt kann aber auch ein Zusammenschluss mehrerer Sensoren und/oder Aktoren sein, beispielsweise ein Motor, ein Reaktor, eine Pumpe oder ein Ventilsystem.

Unter einem Operator wird ein menschlicher Bediener der technischen Anlage verstanden. Der Operator interagiert mittels spezieller Benutzerschnittstellen mit der technischen Anlage bzw. dessen Leitsystem und steuert spezielle technische Funktionen der Anlage. Hierzu kann der Operator ein Bedien- und Beobachtungssystem des Leitsystems nutzen.

Unter einem "Operator Station Server" wird vorliegend ein Server verstanden, der zentral Daten eines Bedien- und Beobachtungssystems sowie in der Regel Alarm- und Messwertarchive eines Prozessleitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen. Bei dem Operator Station Server kann es sich, ohne sich darauf zu beschränken, um einen SIMATIC PCS 7 Industrial Workstation Server von SIEMENS handeln.

Der Ausdruck "dem Leitsystem bekannt" meint dabei, dass dem Leitsystem, bzw. genauer einem Visualisierungsdienst des Leitsystems, Informationen über die jeweiligen Datenstrukturtypen bekannt sind, um diese an einen angeschlossenen Operator Station Client zur grafischen Darbietung übertragen zu können.

Durch den erfindungsgemäßen Operator Station Server und dessen erfinderischem Transformationsbaustein kann die Visualisierung der einzelnen (Prozess-)Objekte auf dem Operator Station Client vereinheitlicht werden. Mit anderen Worten bedeutet das, dass die Block Icons und Faceplates, die durch Prozessobjekte von (technischen Fremd-)Objekten dynamisiert werden, bei der Visualisierung genauso aussehen und sich bei der Bedienung genauso verhalten, als stammen sie aus "eigenen" Automatisierungsgeräten. Dies bedeutet, dass die (Prozess-)Daten denselben Datenstrukturtyp in der Visualisierung aufweisen wie Referenzdatenstrukturtypen des Leitsystems der technischen Anlage. Der Datenstrukturtyp kann beispielsweise Informationen über Alarm-Zustände, Farben, Blinksignale, Gruppenalarme und dergleichen enthalten.

Die oben formulierte Aufgabe wird zudem gelöst durch einen Operator Station Server eines Leitsystems einer technischen Anlage, insbesondere Fertigungs- oder Prozessanlage, der mit einem Operator Station Client verbunden ist und einen computerimplementierten Transformationsbaustein aufweist, welcher computerimplementierte Transformationsbaustein dazu ausgebildet und vorgesehen ist,
Daten von einem Operator Station Client zu empfangen, wobei die Daten einen Datenstrukturtyp aufweisen, der einem technischen Objekt der technischen Anlage unbekannt ist,
und die Daten unter Einbezug von in einer Datenbank des Leitsystems hinterlegten Referenzdatenstrukturtypen derart anzupassen, dass der Datenstrukturtyp der Daten dem technischen Objekt bekannt ist,

wobei der Operator Station Server dazu ausgebildet und vorgesehen ist, die angepassten Daten an das technische Objekt zu übertragen.

Leitsystem für eine technische Anlage, insbesondere eine Fertigungs- oder Prozessanlage, das dazu ausgebildet und vorgesehen ist, ein Verfahren wie zuvor erläutert durchzuführen.

Im Gegensatz zum zuvor erläuterten Operator Station Server erfolgt hierbei eine Transformation der Daten vom Operator zum technischen Objekt hin. Auch in dieser Richtung bringt speziell der Transformationsbaustein den gewichtigen Vorteil mit sich, dass der Operator sich nicht um etwaige "Fremdobjekte" kümmern muss, sondern diese wie gewohnt bedienen und beobachten kann - als ob es Standardobjekte des jeweiligen Leitsystems wären.

Ganz besonders vorteilhaft wird die obige Aufgabe gelöst durch einen Operator Station Server eines Leitsystems einer technischen Anlage, insbesondere Fertigungs- oder Prozessanlage, der mit einem Operator Station Client verbunden ist und einen computerimplementierten Transformationsbaustein aufweist, welcher computerimplementierte Transformationsbaustein dazu ausgebildet und vorgesehen ist,
Daten von einem technischen Objekt der technischen Anlage zu empfangen, wobei die Daten einen dem Leitsystem unbekannten Datenstrukturtyp aufweisen,
und die Daten unter Einbezug von in einer Datenbank des Leitsystems hinterlegten Referenzdatenstrukturtypen derart anzupassen, dass der Datenstrukturtyp der Daten dem Leitsystem bekannt ist,
wobei der Operator Station Server dazu ausgebildet und vorgesehen ist, die angepassten Daten an den Operator Station Client zur grafischen Darbietung an einen Operator zu übertragen,
und welcher computerimplementierte Transformationsbaustein dazu ausgebildet und vorgesehen ist,
Daten von einem Operator Station Client zu empfangen, wobei die Daten einen Datenstrukturtyp aufweisen, der einem technischen Objekt der technischen Anlage unbekannt ist,
und die Daten unter Einbezug von in einer Datenbank des Leitsystems hinterlegten Referenzdatenstrukturtypen derart anzupassen, dass der Datenstrukturtyp der Daten dem technischen Objekt bekannt ist,
wobei der Operator Station Server dazu ausgebildet und vorgesehen ist, die angepassten Daten an das technische Objekt zu übertragen.

Der Operator Station Server ermöglicht dadurch Transformationen in beiden Richtungen zwischen dem technischen Objekt und dem Operator Station Client.

Außerdem wird die obige Aufgabe gelöst durch ein Verfahren, umfassend:
a) Empfangen von Daten eines technischen Objekts einer technischen Anlage mittels eines Operator Station Servers eines Leitsystems einer technischen Anlage, insbesondere Fertigungs- oder Prozessanlage, wobei die Daten einen dem Leitsystem unbekannten Datenstrukturtyp aufweisen,
b) Anpassen der Daten unter Einbezug von in einer Datenbank des Leitsystems hinterlegten Referenzdatenstrukturtypen, derart, dass Datenstrukturtyp der Daten dem Leitsystem bekannt wird,
c) Übertragen der angepassten Daten an einen mit dem Operator Station Server verbundenen Operator Station Client zur grafischen Darbietung an einen Operator.

Außerdem wird die obige Aufgabe gelöst durch ein Verfahren, umfassend:
a) Empfangen von Daten eines Operators von einem mit einem Operator Station Server eines Leitsystems einer technischen Anlage, insbesondere Fertigungs- oder Prozessanlage, verbundenen Operator Station Clients, wobei die Daten einen einem technischen Objekt der technischen Anlage unbekannten Datenstrukturtyp aufweisen,
b) Anpassen der Daten unter Einbezug von in einer Datenbank des Leitsystems hinterlegten Referenzdatenstrukturtypen, derart, dass der Datenstrukturtyp der Daten dem technischen Objekt bekannt wird,
c) Übertragen der angepassten Daten an das technische Objekt mittels des Operator Station Servers.

Außerdem wird die obige Aufgabe gelöst durch ein Verfahren, umfassend:
a) Empfangen von Daten eines technischen Objekts einer technischen Anlage mittels eines Operator Station Servers eines Leitsystems einer technischen Anlage, insbesondere Fertigungs- oder Prozessanlage, wobei die Daten einen dem Leitsystem unbekannten Datenstrukturtyp aufweisen,
b) Anpassen der Daten unter Einbezug von in einer Datenbank des Leitsystems hinterlegten Referenzdatenstrukturtypen, derart, dass Datenstrukturtyp der Daten dem Leitsystem bekannt wird,
c) Übertragen der angepassten Daten an einen mit dem Operator Station Server verbundenen Operator Station Client zur grafischen Darbietung an einen Operator,
d) Empfangen von Daten eines Operators von einem mit einem Operator Station Server eines Leitsystems einer technischen Anlage, insbesondere Fertigungs- oder Prozessanlage, verbundenen Operator Station Clients, wobei die Daten einen einem technischen Objekt der technischen Anlage unbekannten Datenstrukturtyp aufweisen,
e) Anpassen der Daten unter Einbezug von in einer Datenbank des Leitsystems hinterlegten Referenzdatenstrukturtypen, derart, dass der Datenstrukturtyp der Daten dem technischen Objekt bekannt wird,
f) Übertragen der angepassten Daten an das technische Objekt mittels des Operator Station Servers.

Außerdem wird die obige Aufgabe gelöst durch ein Verfahren, umfassend:
a) Empfangen von Daten eines Operators von einem mit einem Operator Station Server eines Leitsystems einer technischen Anlage, insbesondere Fertigungs- oder Prozessanlage, verbundenen Operator Station Clients, wobei die Daten einen einem technischen Objekt der technischen Anlage unbekannten Datenstrukturtyp aufweisen,
b) Anpassen der Daten unter Einbezug von in einer Datenbank des Leitsystems hinterlegten Referenzdatenstrukturtypen, derart, dass der Datenstrukturtyp der Daten dem technischen Objekt bekannt wird,
c) Übertragen der angepassten Daten an das technische Objekt mittels des Operator Station Servers,
d) Empfangen von Daten eines technischen Objekts einer technischen Anlage mittels eines Operator Station Servers eines Leitsystems einer technischen Anlage, insbesondere Fertigungs- oder Prozessanlage, wobei die Daten einen dem Leitsystem unbekannten Datenstrukturtyp aufweisen,
e) Anpassen der Daten unter Einbezug von in einer Datenbank des Leitsystems hinterlegten Referenzdatenstrukturtypen, derart, dass Datenstrukturtyp der Daten dem Leitsystem bekannt wird,
f) Übertragen der angepassten Daten an einen mit dem Operator Station Server verbundenen Operator Station Client zur grafischen Darbietung an einen Operator.

Zudem wird die Aufgabe gelöst durch ein Leitsystem für eine technische Anlage, insbesondere eine Fertigungs- oder Prozessanlage, das dazu ausgebildet und vorgesehen ist, ein Verfahren wie zuvor erläutert durchzuführen.

Zudem wird die Aufgabe gelöst durch ein Leitsystem für eine technische Anlage, insbesondere eine Fertigungs- oder Prozessanlage, das wenigstens einen Operator Station Server wie zuvor erläutert aufweist.

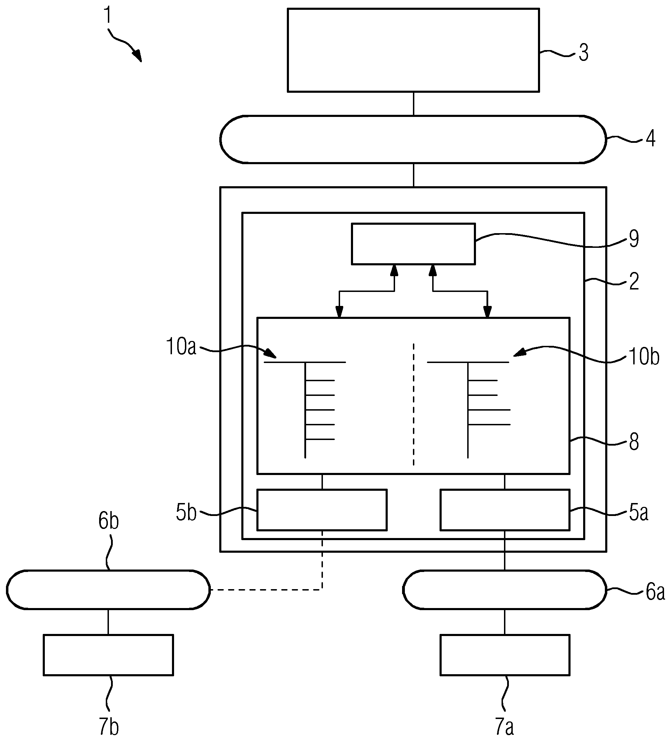

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein Teil eines erfindungsgemäßen Leitsystems 1 einer als verfahrenstechnische Anlage ausgebildeten technischen Anlage dargestellt. Das Leitsystem 1 umfasst einen Server eines Bediensystems bzw. einen Operator Station Server 2 und einen dazugehörigen Operator Station Client 3. Der Operator Station Server 2 und der Operator Station Client 3 sind über einen Terminalbus 4 miteinander und mit nicht dargestellten weiteren Komponenten des Leitsystems 1 wie einem Engineering System Server oder einem Prozessdatenarchiv verbunden.

Ein Benutzer bzw. Operator hat mittels des Operator Station Servers 3 mittels des Terminalbus 4 im Kontext eines Bedienens und Beobachtens Zugriff auf den Operator Station Server 2. Der Terminalbus 4 kann, ohne sich darauf zu beschränken, beispielsweise als Industrial Ethernet ausgebildet sein.

Der Operator Station Server 2 weist eine erste Geräteschnittstelle 5a auf, die mit einem ersten Anlagenbus 6a verbunden ist. Hierüber kann der Operator Station Server 2 mit einem (externen) ersten Gerät 7a kommunizieren. Bei dem angeschlossenen Gerät 7a kann es sich dabei alternativ auch um eine Applikation, insbesondere Webapplikation, handeln.

Weiterhin weist der Operator Station Server 2 eine zweite Geräteschnittstelle 5b auf, die mit einem zweiten Anlagenbus 6b verbunden ist. Hierüber kann der Operator Station Server 2 mit einem (externen) zweiten Gerät 7b kommunizieren. Bei dem angeschlossenen Gerät 7b kann es sich dabei alternativ auch um eine Applikation, insbesondere Webapplikation, handeln.

Beide Anlagenbusse 6a, 6b können, ohne sich darauf zu beschränken, beispielsweise als Industrial Ethernet ausgebildet sein. Das erste und zweite Gerät 7a, 7b können jeweils mit einer beliebigen Anzahl an Subsystemen (nicht dargestellt) verbunden sein.

Der Operator Station Server 2 weist ein Prozessabbild (Process Image) 8 auf, in welchem zu einer Laufzeit der verfahrenstechnischen Anlage von den Geräten 7a, 7b empfangene Prozesswerte hinterlegt sind. Zudem weist der Operator Station Server 2 einen Transformationsbaustein 9 auf, dessen Funktionsweise im Folgenden erläutert wird.

Bei dem zweiten Gerät 7b handelt es sich um ein "Fremdgerät", d.h. es ist dem Leitsystem 1 der verfahrenstechnischen Anlage noch nicht bekannt. Zwecks einer Kommunikation mit dem Fremdgerät 7b werden auf dem Operator Station Server 2 entsprechende Gerätetreiber 5b (z.B. OPC UA, ModBus und dgl.) bereitgestellt. Über diese Gerätetreiber 5b bzw. Kommunikationstreiber können Prozessdaten zwischen dem angebundenen Fremdgerät 7b und dem Prozessabbild 8 des Operator Station Servers 2 ausgetauscht werden (lesend/schreibend).

Die Prozessdaten des Fremdgeräts 7b werden unmittelbar und unverändert in das Prozessabbild 8 Operator Station Servers 2 geschrieben (hier beispielhaft in eine erste Datenstruktur 10a mit der Bezeichnung "Monitor:Tank1_Level*"). Ein Datenstrukturtyp der Prozessdaten des Fremdgeräts 7b stimmt mit keinen der in einer Datenbank (nicht dargestellt) des Leitsystems 1 hinterlegten Referenzdatenstrukturtypen überein. Daher kann die in dem Prozessabbild hinterlegte erste Datenstruktur 10a nicht für eine primäre Visualisierung in Block Symbolen oder Faceplates auf dem Operator Station Client 3 verwendet werden.

Der Transformationsbaustein 9 transformiert einen Datenstrukturtyp der ersten Datenstruktur in einen dem Leitsystem 1 bekannte Datenstrukturtyp einer zweiten Datenstruktur um. Der Datenstrukturtyp der zweiten Datenstruktur 10b (in der Figur mit "Monitor:Tank1_Level" bezeichnet) entspricht damit einem Datenstrukturtyp "eigener" Prozessobjekte. Damit ist der Datenstrukturtyp der ersten Datenstruktur 10a dem Leitsystem 1 bekannt und einem Operator des Leitsystems 1 können auch bei der Integration von Fremdgeräten 7b einheitliche Bedien- und Beobachtungsbilder (Faceplates, Symbole etc.) auf dem Operator Station Client 3 dargeboten werden. Umgekehrt transformiert der Transformationsbaustein die von dem Operator mittels des Operator Station Clients 3 an das Fremdgerät 7b übertragenen Bedien- und Beobachtungsanweisungen in den ursprünglichen Datenstrukturtyp zurück, damit das Fremdgerät 7b die Anweisungen des Operators verstehen kann.

Im Folgenden sind einige Beispiele für Transformationsvorgänge des Transformationsbausteins 9 angegeben:
- Transformation, falls ein Typ der eingehenden Datenstruktur 10a in Semantik und Format einem Typ der bekannten Datenstruktur 10b für die Bedienung und Beobachtung entspricht: Monitor: Tank1_Level* => Monitor: Tank1_Level
- Transformation, falls ein Typ der eingehenden Datenstruktur 10a zwar in Semantik, aber nicht im Format (z.B. wegen unterschiedlicher Einheiten) einem Typ der bekannten Datenstruktur 10b für die Bedienung und Beobachtung entspricht: Monitor: Tank1_Level*0,0254 => Monitor: Tank1_Level
- Transformation, falls der Typ der bekannten Datenstruktur 10b mehr Schwellwertalarme aufweist als durch den Typ der eingehenden Datenstruktur 10a bereitgestellt werden: Monitor: Tank1_Level*>50 => Monitor: Tank1_Level.AlHigh=true Monitor: Tank1_Level*>100 => Monitor: Tank1_Level.AlCrit=true
- Transformation, falls der Typ der bekannten Datenstruktur 10b den Status anders codiert als durch er durch den Typ der eingehenden Datenstruktur 10a definiert ist: Monitor: Tank1_Level*.Stat => Monitor: Tank1_Level.Stat[X] Monitor: Tank1_Level*.Tag[0] => Monitor: Tank1_Level.Stat[Y] Monitor: Tank1_Level*.Tag[1] => Monitor: Tank1_Level.Stat[Z]

Die Referenzdatenstrukturtypen sowie die Transformationsskripte des Transformationsbausteins 9 können durch das Engineering konfiguriert und entsprechend auf dem Operator Station Server 2 hinterlegt werden, der modulare Anlagenteile bzw. Package Units bzw. Fremdsysteme einbindet.

Beim Import von modularen Anlagenteilen im Engineering wird in der Regel eine Schnittstelleninformation (bei Standards wie dem Module Type Package bzw. MTP) eingelesen, so dass die für die Bedienung und Beobachtung vorgesehenen Prozessobjekte dem Leitsystem bekannt sind. Diese Prozessobjekte umfassen den Datenstrukturtyp, wie der Operator Station Server 2 ihn von dem modularen Anlagenteil empfängt.

Mithilfe der Erfindung ist es für den Operator der verfahrenstechnischen Anlage möglich, unabhängig von den in die Anlage integrierten Geräten 7a, 7b ein einheitliches Bedien- und Beobachtbild zu verwenden. Mit anderen Worten wird eine einheitliche Visualisierung von Prozessobjekten in der Bedienung und Beobachtung realisiert, obgleich deren Prozessdaten von Fremdsystemen stammen können.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Operator Station Server (2) eines Leitsystems (1) einer technischen Anlage, insbesondere Fertigungs- oder Prozessanlage, der mit einem Operator Station Client (3) verbunden ist und einen computerimplementierten Transformationsbaustein (9) aufweist, welcher computerimplementierte Transformationsbaustein (9) dazu ausgebildet und vorgesehen ist,
Daten von einem technischen Objekt (7a, 7b) der technischen Anlage zu empfangen, wobei die Daten einen dem Leitsystem (1) unbekannten Datenstrukturtyp aufweisen,
und die Daten unter Einbezug von in einer Datenbank des Leitsystems (1) hinterlegten Referenzdatenstrukturtypen derart anzupassen, dass der Datenstrukturtyp der Daten dem Leitsystem (1) bekannt ist,
wobei der Operator Station Server (2) dazu ausgebildet und vorgesehen ist, die angepassten Daten an den Operator Station Client (3) zur grafischen Darbietung an einen Operator zu übertragen.

2. Operator Station Server (2) eines Leitsystems (1) einer technischen Anlage, insbesondere Fertigungs- oder Prozessanlage, der mit einem Operator Station Client (3) verbunden ist und einen computerimplementierten Transformationsbaustein (9) aufweist, welcher computerimplementierte Transformationsbaustein (9) dazu ausgebildet und vorgesehen ist,
Daten von einem Operator Station Client (3) zu empfangen, wobei die Daten einen Datenstrukturtyp aufweisen, der einem technischen Objekt (7a, 7b) der technischen Anlage unbekannt ist,
und die Daten unter Einbezug von in einer Datenbank des Leitsystems (1) hinterlegten Referenzdatenstrukturtypen derart anzupassen, dass der Datenstrukturtyp der Daten dem technischen Objekt (7a, 7b) bekannt ist,
wobei der Operator Station Server (2) dazu ausgebildet und vorgesehen ist, die angepassten Daten an das technische Objekt (7a, 7b) zu übertragen.

3. Operator Station Server (2) eines Leitsystems (1) einer technischen Anlage, insbesondere Fertigungs- oder Prozessanlage, der mit einem Operator Station Client (3) verbunden ist und einen computerimplementierten Transformationsbaustein (9) aufweist, welcher computerimplementierte Transformationsbaustein (9) dazu ausgebildet und vorgesehen ist,
Daten von einem technischen Objekt (7a, 7b) der technischen Anlage zu empfangen, wobei die Daten einen dem Leitsystem (1) unbekannten Datenstrukturtyp aufweisen,
und die Daten unter Einbezug von in einer Datenbank des Leitsystems hinterlegten Referenzdatenstrukturtypen derart anzupassen, dass der Datenstrukturtyp der Daten dem Leitsystem (1) bekannt ist,
wobei der Operator Station Server (2) dazu ausgebildet und vorgesehen ist, die angepassten Daten an den Operator Station Client (3) zur grafischen Darbietung an einen Operator zu übertragen,
und welcher computerimplementierte Transformationsbaustein (9) dazu ausgebildet und vorgesehen ist,
Daten von einem Operator Station Client (3) zu empfangen, wobei die Daten einen Datenstrukturtyp aufweisen, der einem technischen Objekt (7a, 7b) der technischen Anlage unbekannt ist,
und die Daten unter Einbezug von in einer Datenbank des Leitsystems (1) hinterlegten Referenzdatenstrukturtypen derart anzupassen, dass der Datenstrukturtyp der Daten dem technischen Objekt (7a, 7b) bekannt ist,
wobei der Operator Station Server (2) dazu ausgebildet und vorgesehen ist, die angepassten Daten an das technische Objekt (7a, 7b) zu übertragen.

4. Verfahren, umfassend:
a) Empfangen von Daten eines technischen Objekts (7a, 7b) einer technischen Anlage mittels eines Operator Station Servers (2) eines Leitsystems (1) einer technischen Anlage, insbesondere Fertigungs- oder Prozessanlage, wobei die Daten einen dem Leitsystem (1) unbekannten Datenstrukturtyp aufweisen,
b) Anpassen der Daten unter Einbezug von in einer Datenbank des Leitsystems hinterlegten Referenzdatenstrukturtypen, derart, dass Datenstrukturtyp der Daten dem Leitsystem (1) bekannt wird,
c) Übertragen der angepassten Daten an einen mit dem Operator Station Server (2) verbundenen Operator Station Client (3) zur grafischen Darbietung an einen Operator.

5. Verfahren, umfassend:
a) Empfangen von Daten eines Operators von einem mit einem Operator Station Server (2) eines Leitsystems (1) einer technischen Anlage, insbesondere Fertigungs- oder Prozessanlage, verbundenen Operator Station Clients (3), wobei die Daten einen einem technischen Objekt (7a, 7b) der technischen Anlage unbekannten Datenstrukturtyp aufweisen,
b) Anpassen der Daten unter Einbezug von in einer Datenbank des Leitsystems (1) hinterlegten Referenzdatenstrukturtypen, derart, dass der Datenstrukturtyp der Daten dem technischen Objekt (7a, 7b) bekannt wird,
c) Übertragen der angepassten Daten an das technische Objekt (7a, 7b) mittels des Operator Station Servers (2).

6. Verfahren, bei dem zunächst die Verfahrensschritte gemäß Anspruch 4 und anschließend die Verfahrensschritte gemäß Anspruch 5 oder umgekehrt durchgeführt werden.

7. Leitsystem (1) für eine technische Anlage, insbesondere eine Fertigungs- oder Prozessanlage, das dazu ausgebildet und vorgesehen ist, ein Verfahren gemäß einem der Ansprüche 4 bis 6 durchzuführen.

8. Leitsystem (1) für eine technische Anlage, insbesondere eine Fertigungs- oder Prozessanlage, das wenigstens einen Operator Station Server (2) gemäß einem der Ansprüche 1 bis 3 aufweist.
